# EUROPEAN PATENT APPLICATION

(11) **EP 0 904 874 A1**
(43) Date of publication of application: **31.03.1999**
(21) Application number: 98306120.1
(22) Date of filing: 31.07.1998
(51) Int. Cl.: B22D 11/06, B22D 11/128

(54) **Casting roll**

(30) Priority: 08.08.1997 GB 9716724
(71) Applicant: Kvaerner Metals Continuous Casting Limited, Sheffield S9 4EX (GB)
(72) Inventor: Perry, Robert, Worksop, Nottinghamshire, S80 2QN (GB); Wright, Leslie, Nether Edge, Sheffield, S7 1DN (GB); Reynolds, Timothy, Grindleford, Derbyshire, S30 1JG (GB)
(74) Representative: Loughrey, Richard Vivian Patrick

(57) **Abstract**

A casting roll 1 for casting molten metal and forming it into a solid continuous strip form comprises a shell 6 coupled to a drive shaft 9. A plurality of shaper units 8, 12 is arranged inside the shell, to allow the shape of the shell to be adjusted. The drive shaft 9 is of large diameter and is coupled directly to the shell 6. The shaper units act between the inside of the shell and the drive shaft, which, being massive, acts as the primary structural element to absorb the reaction forces from the shaper units. A further set of shaper units spaced 180° round the shaft may be provided. to enable the shape of the shell to be controlled more accurately. The drive shaft may be coupled to the centre of the shell (Fig. 3) or to one end.

## Description

The invention relates to casting rolls suitable for casting molten metal and forming the molten metal into a solid continuous strip form. The application of the invention is to rolls suitable for use in a caster comprising two strip casting rolls.

A strip caster typically requires a pair of rolls with their axis of rotation horizontal and which are spaced apart to provide a gap between them. The rolls may be arranged side by side, with dams provided at the ends of the rolls on their upper side to form a space above the roll gap into which molten metal is poured. Alternatively, the molten metal may be injected through a nozzle into the gap between the rolls, with the nozzle being fed with molten metal from a reservoir located above the rolls so that a sufficient head of pressure is created at the outlet of the nozzle. The nozzle may be directed either horizontally, or upwardly, either at an acute angle or vertically, with respect to the roll gap.

The rolls are usually liquid cooled to absorb heat from the molten metal which comes into contact with them, and the molten metal thus forms solidified skins which thicken as the rolls rotate. As the rolls are rotated, they bring the solidified skins of metal together and through the gap between the rolls to form a continuous metal strip.

In an effort to increase casting output, it is desirable to increase the speed of rotation of the rolls, provided sufficient heat can be removed from the rolls.

Care has to be taken that the rolls absorb sufficient heat from the molten metal in contact with them to form two solidified skins whose total thickness equals the thickness of the exiting strip.

A problem with roll casting of this kind is that considerable thermal as well as dynamic stresses are induced in the rolls during casting, in particular thermal stresses as the desired rapid cooling of the molten metal takes place during the casting. This causes deformation of the rolls, which causes the ultimate strip dimensions to be variable and may produce surface contour variations which are preferably avoided.

To overcome this, it has been proposed to use shape controlled rolls. A shape controlled roll comprises a set of shaping units surrounded by a thin rotatable shell. The shaping units are hydraulically controlled and are operated to push against the inside of the shell to expand it. By using a line of shaping units, the profile of the shell can be adjusted as desired. A line of sensors across the emergent cast strip monitors the thickness of the strip across its width (or the tension in the strip) and controls the shaping units appropriately. The shaping units are mounted on a fixed shaping unit support extending inside the shell, which is driven by a drive shaft. One or both rolls may be provided with shaper units. The rolls may be backed up by back-up rolls, located outside the main rolls, which provide additional support for the rolls. Also, work rolls may be provided between the two main rolls, with the molten metal passing between the work rolls and the main rolls determining the effective profiles of and/or pressures on the work rolls.

The object of the present invention is to provide a particularly effective form of casting roll using shaping units.

According to the invention there is provided a casting roll comprising a shell coupled to a drive shaft and having a plurality of shaper units inside the shell, characterized in that the drive shah is of large diameter and is coupled directly to the shell. The shaper units act between the inside of the shell and the drive shaft, which, being massive, acts as the primary structural element to absorb the reaction forces from the shaper units. It may however be desirable to provide a further set of shaper units spaced 180 ° round the shaft, to enable the shape of the shell to be controlled more accurately.

This structure requires the shaper units to be supported or retained by shaper unit support elements which extend into the shell, between the shell and the drive shaft, but are supported only at one end. The drive shaft may be coupled to the middle of the shell, in which case the shaper units are arranged in half-rows and there are separate shaper unit support elements at each end of the roll; alternatively, the drive shaft may be coupled to the shell at one end, in which case the shaper units are in full rows and the shaper unit support elements extend into the roll from only one end.

A number of rolls embodying the invention will now be described in more detail, by way of example, with reference the following drawings, in which:
Figs. 1a to 1c are schematic views of injecting the molten metal into the roll gap of a caster through a nozzle horizontally, at an angle upwardly, and vertically upwardly;
Fig. 2 is a schematic view of the gravitational feeding of the molten metal into the roll gap from a pool above;
Figs. 3 to 6 are longitudinal section of the end parts of various rolls;
Fig. 7 is a cross section through a pair of rolls A and B in the casting position;
Fig. 8 is a longitudinal section of the end part of a further roll;
Figs. 9 to 10 are longitudinal sections of complete rolls; and
Figs. 11 to 12 are cross sectional views showing alternative cooling arrangements.

The same numerical identifiers will be used for corresponding parts in the various embodiments.

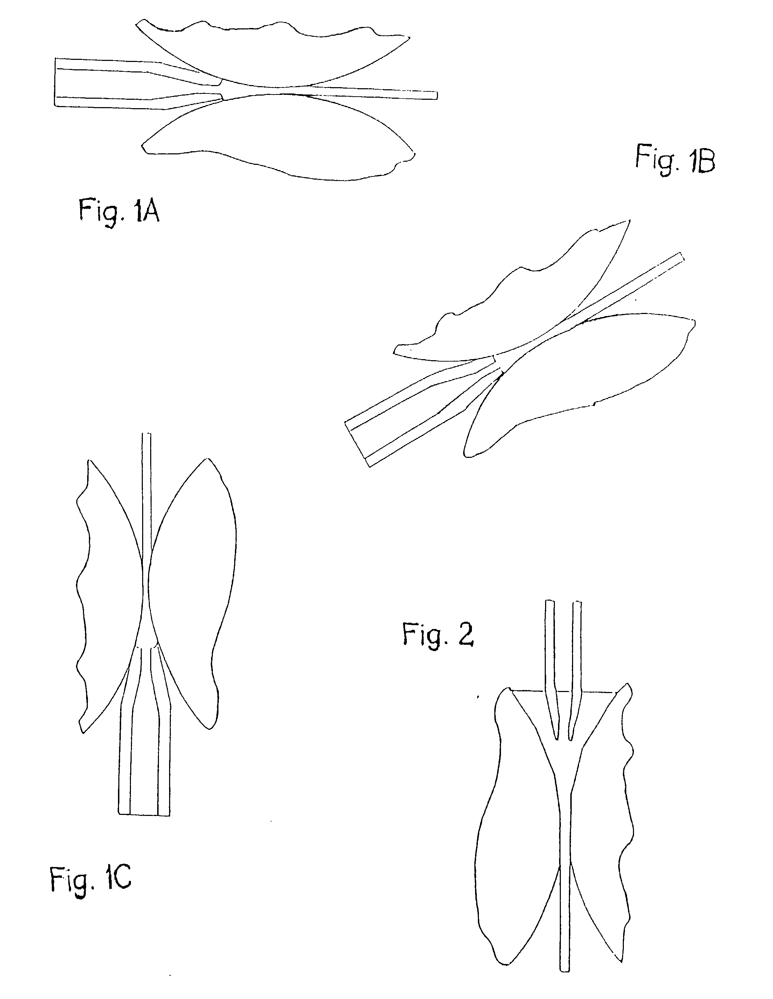

Figs. 1a to 1c show a method of continuous casting into a roll by injecting the molten metal into the gap between the casting rolls using a nozzle. The injecting nozzle may be arranged at any convenient angle to the casting rolls so that the metal is cast either horizontally as in Fig. 1a, or upwardly at an angle as in Fig. 1b, or alternatively upwardly vertically as in Fig. 1c. By casting using such an injection nozzle, a convenient width of cast strip may be formed which does not extend the whole width of the casting roll but only in a central region thereof.

Fig. 2 shows another method of continuous casting into a roll, by gravitational feeding of the molten metal into the roll gap from a pool above. This method may require sealing the sides of the rolls to prevent leakage from the pool formed above the rolls.

For both of these methods, the solidification process of the metal from the liquid state to the strip state has to occur over the distance from the first contact with the rolls at the molten side to the last point of contact with rolls on the strip side. Although solidification will not necessarily be complete, the metal has to be solid enough to behave as a strip material so that the desired dimensions of the strip material at the exit of the casting rolls are maintained. Thus a significant task of the casting rolls is to remove as much heat as required from the molten metal so that sufficient solidification can take place and the desired exit through temperature of the strip is achieved. It is also desirable to control the dimensions and flatness of the exiting strip material, and this is a major objective of the present apparatuses.

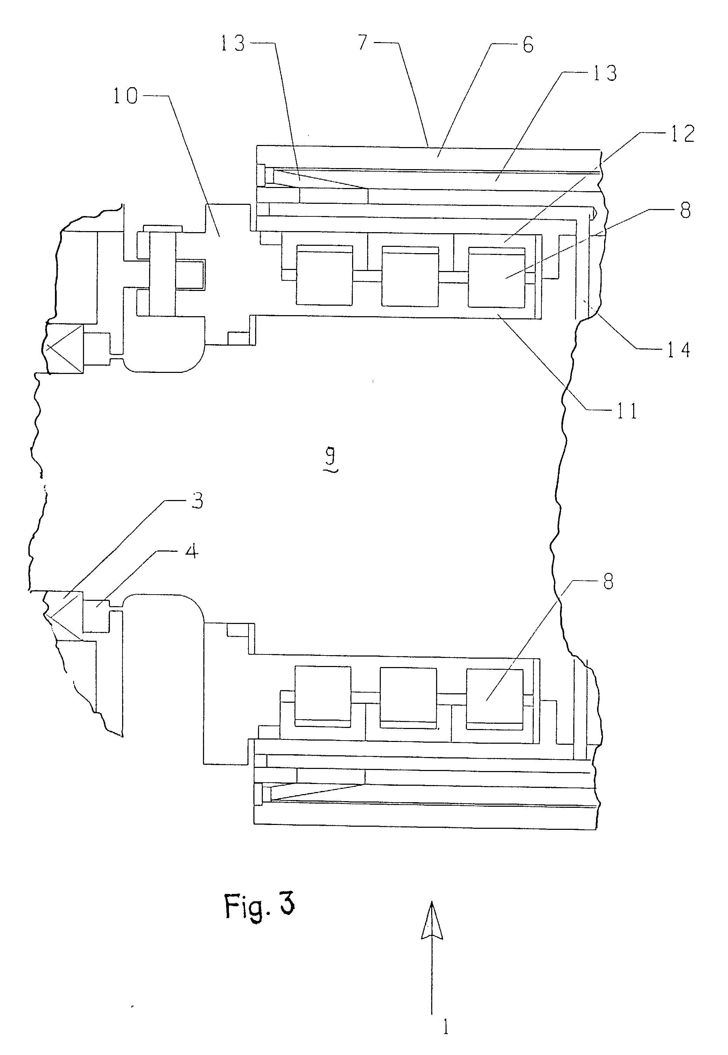

Referring now to Fig. 3, one end of a casting roll is shown; the opposite end of the casting roll is similar. The casting roll 1 comprises a rotatable main shaft 9 carried in bearing means 3 mounted in a fixed support 4 of a frame of a roll stand. An outer annular casing or shell 6 forms an external cylindrical surface 7 which is in contact with the metal being cast. The shell 6 is mounted directly at its centre (shown at the right-hand side of the drawing) on the main shaft 9.

The roll 1 includes four half-rows of shell deforming elements. One half-row of deforming elements is located beneath the top part of the shell 6, as shown in Fig. 3, and a second half-row is arranged diametrically opposite, above the bottom part of the shell 6 as shown in the drawing. The right-hand part of the roll (not shown) has a corresponding pair of half-rows of deforming elements, so that the two upper half-rows together form a full upper now and the two lower half-rows together form a full lower row.

Each deforming element consists of an actuation pad 12 and a piston 8. A fixed element support member 10 provides support for the two left-hand half-rows of deforming rods elements and retains them in position. The element support member 10 includes recesses 11 in which the pistons 8 are located.

The deforming elements are arranged between the main shaft 9 and the outer shell 6, and each may be operated independently to cause the outer shell 6 to deform. Each element includes an actuation pad 12 acts against the internal surface of the shell 6, and each has its own hydraulic actuating line (not shown), and can be operated to deform the shell 6 in the region immediately above that element concerned, thus producing the desired profile ofthe outer shell 6.

The reaction force of the shell deforming elements acts directly on the shaper support element 10. However, this bears against the shaft 9 and transmits the reaction force to that shaft, so the reaction force of the shell deforming elements (shaper units) is carried primarily by the drive shaft 9.

The deforming elements of the upper now are opposite corresponding elements in the lower now, so that the deformation forces created by one deforming element in one now may be balanced against its corresponding opposing deforming element in the other now. This tends to produce a symmetrical or elliptical deformation of the shell 6.

The main shaft 9 is carried in the end bearing means 3 and is driven by appropriate driving means, not shown, so that it rotates during the casting process. The central part of the main shaft 9 is connected directly to the shell 6 and by this means the shell 6 is also rotated during the casting process.

The outer shell 6 is cooled by internal cooling means which consists of internal channels 13 arranged in the outer shell 6 and which are connected to the coolant supply 14 through the main shaft 9.

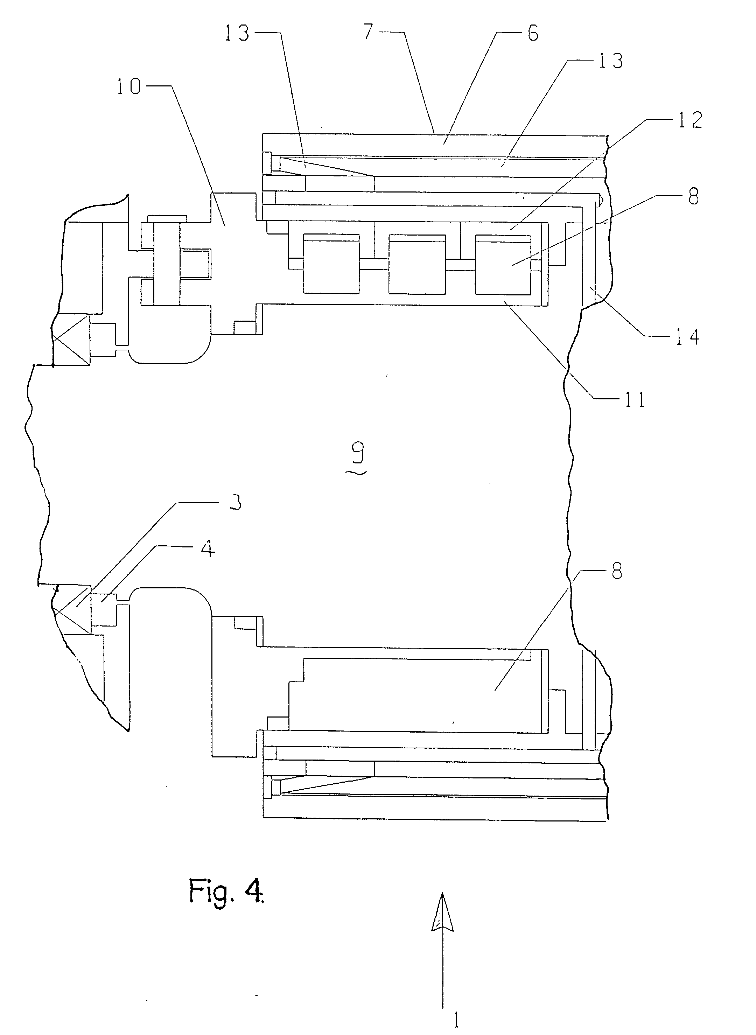

Fig. 4 shows a casting roll which is similar to that shown in Fig. 3 except that there is only one now of shell deforming elements, provided on one side only of the roll 1. The reaction force of the shell deforming elements is carried primarily by the drive shaft 9, and the deforming elements tend to produce an egg-shaped deformation of the shell 6.

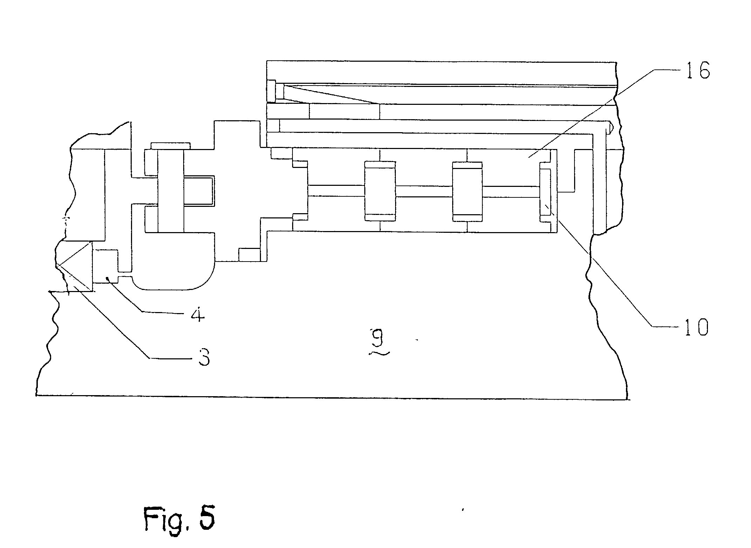

Fig. 5 shows a casting roll which is similar to that of Fig. 3 (with only the part above the centre line of the drive shaft 9 being shown), but which has an alternative arrangement of the shell deforming elements with a different piston arrangement. The pistons 16 are provided in pairs and the hydraulic pressure is applied between the pistons to operate them to deform the corresponding parts of the shell 6. The pistons 16 are arranged in the support member 10 which acts as a cage providing axial locating of the pistons 16; the pistons 16 act directly on the shaft 9 in the radial direction.

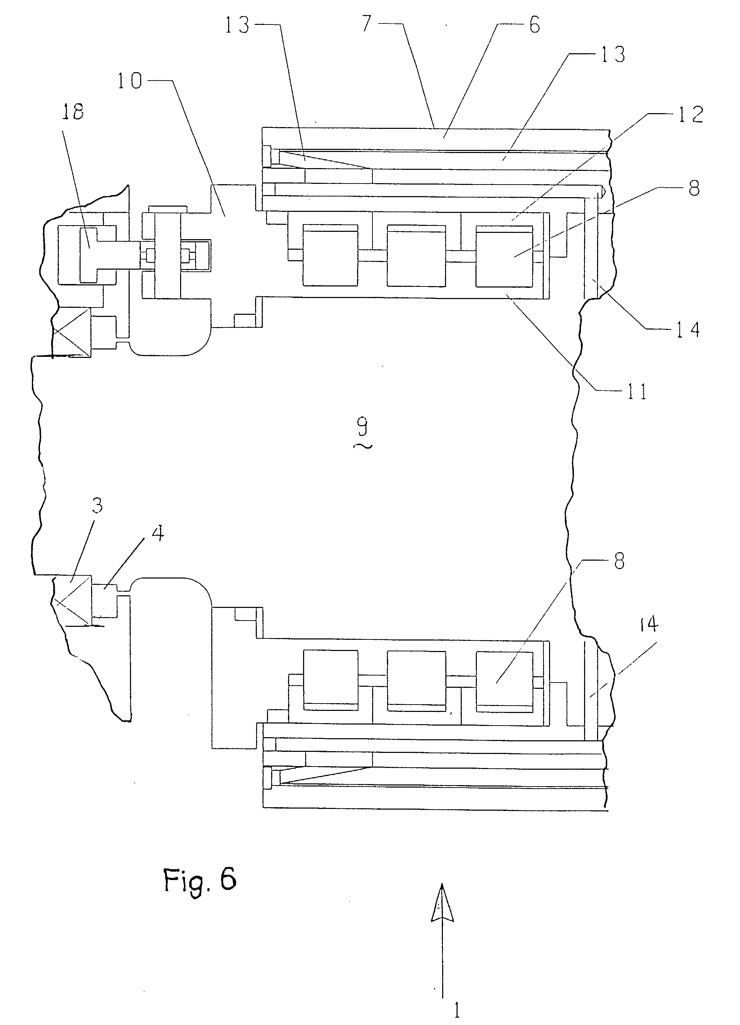

Fig. 6 shows a casting roll which is similar to that of Fig. 3 with an additional axial piston means 18 provided in the support member 10 to adjust the axial position of the support member 10 and thus in turn adjust the axial position of the shell deforming elements. The axial piston means 18 is operated by a separate hydraulic line (not shown) to adjust the axial position of the elements with respect to the shell 6.

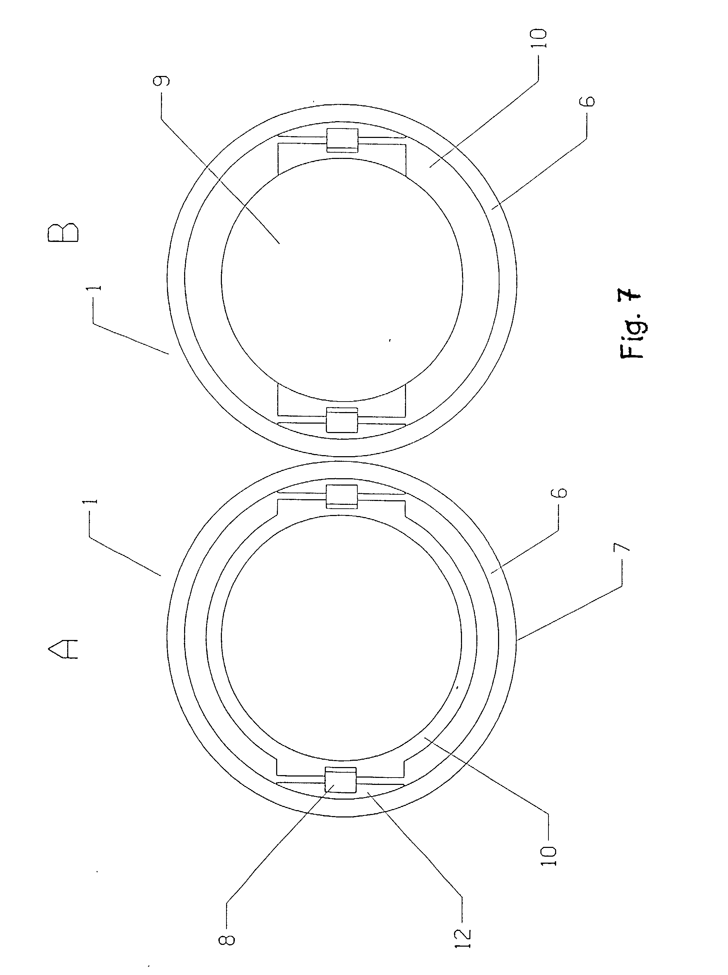

Fig. 7 is a cross-sectional view of two rolls arranged together in the working position. The rolls are of the general type shown in the longitudinal section of Fig. 3, showing a set or now of shell deforming elements along the length of the roll and a corresponding opposing set on the opposite side. Roll A shows a single deforming element support member 10 and roll B shows a pair of such support members, one for the row of deforming elements adjacent to the pinch between the rolls and the other for the row opposite the pinch.

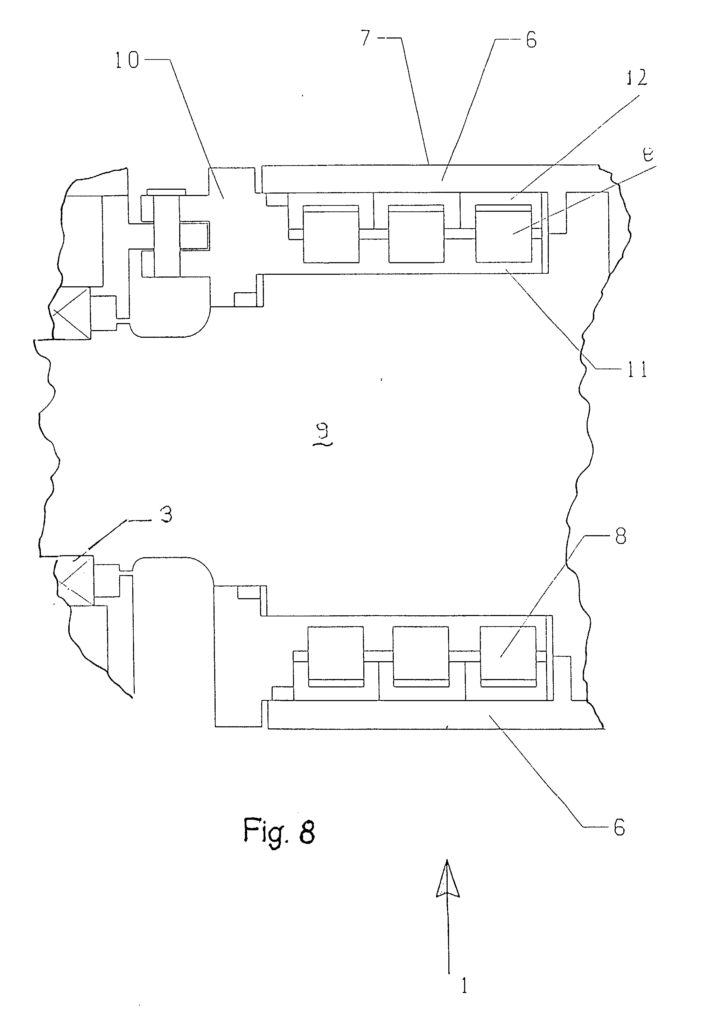

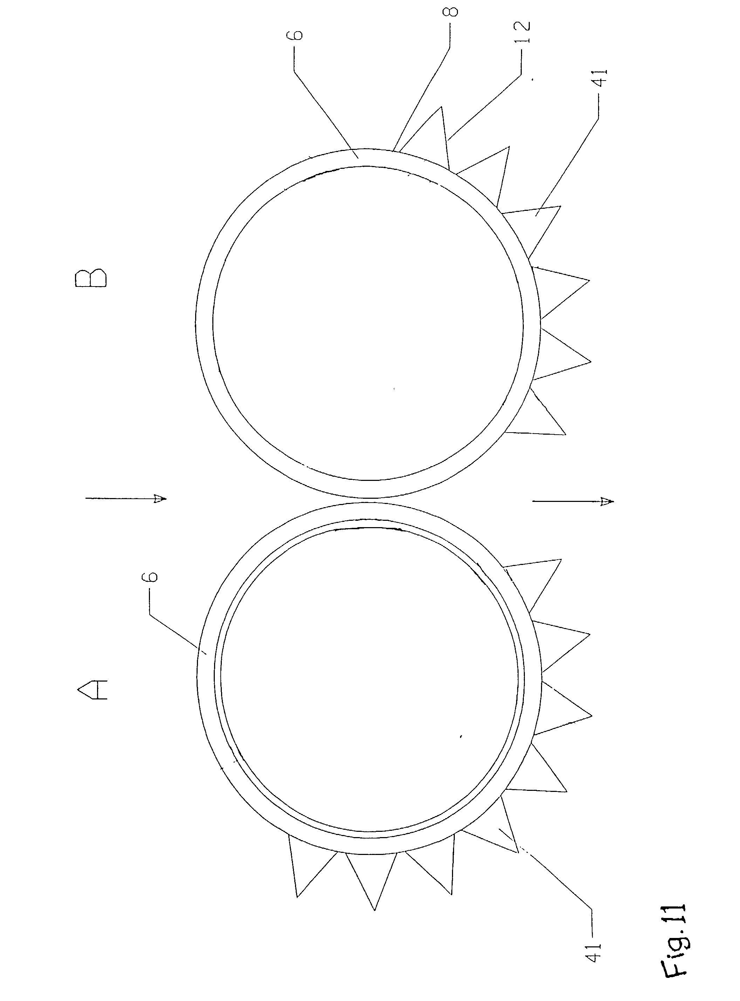

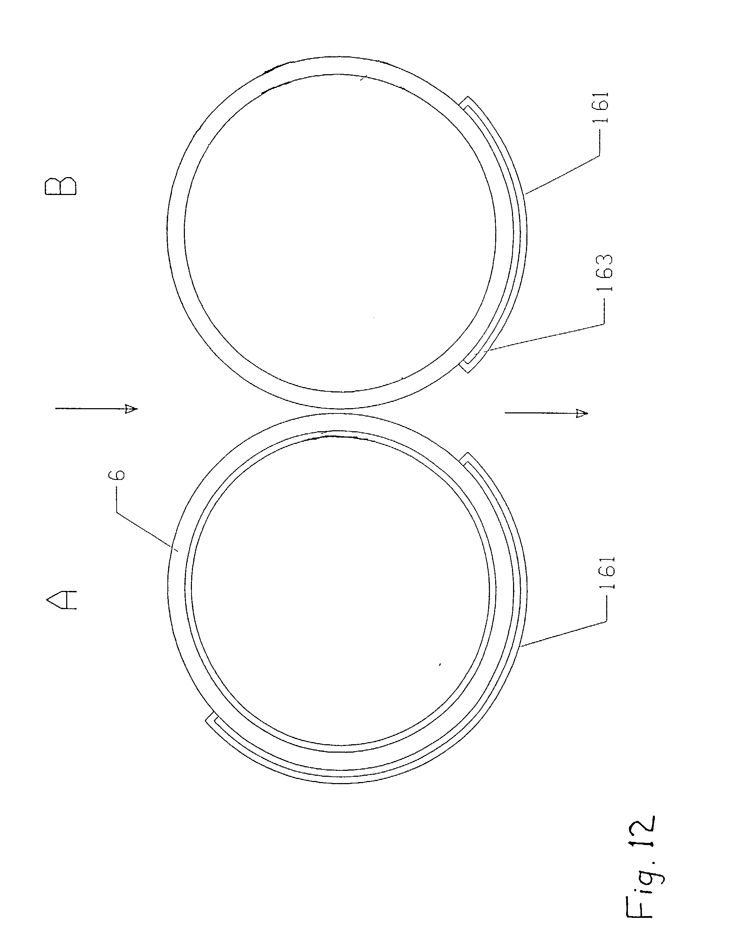

Fig. 8 shows a further casting roll. The shell 6 is a thin shell, with no internal cooling. The shell cooling in this arrangement may be provided either by external sprays as shown in fig. 11, or by the hydraulic lubricant acting directly on the under side of the shell 6. Preferably this hydraulic fluid is the same as the fluid used to operate the pistons, though a separate coolant could also be used. A further alternative method of cooling is to use water boxes or hydro-pads, as shown in fig. 12, which are fitted closely to the external curved surface of the shell 6.

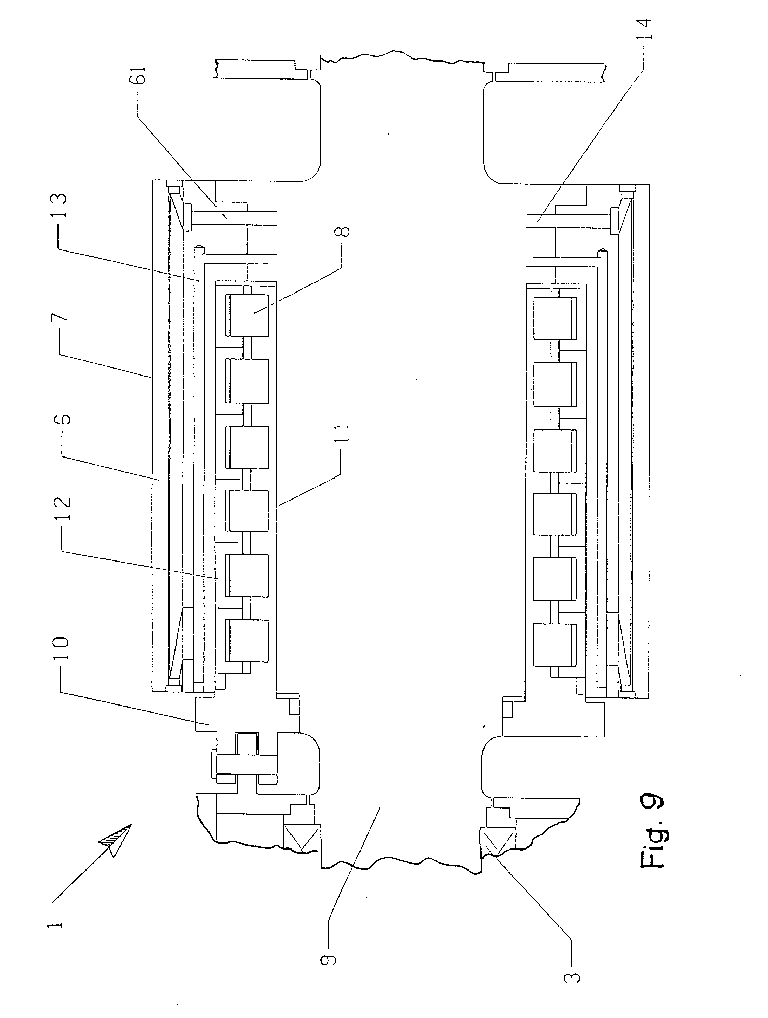

Fig. 9 shows an entire roll 1, in which cooling is provided by internal cooling channels as in the roll of Fig. 3. In this roll however the shell deforming elements are arranged as a single full row of six such elements on one side of the roll with a corresponding now of six elements on the opposite side of the roll. The shell deforming elements start at the right hand end of the roll as viewed, and continue along most of the length of the roll 1. At the opposite left hand end of the roll, the shell 6 is connected directly to the central supporting drive shaft 9. The coolant and drive connections 61 to the shell are provided at the right hand connection to the shaft.

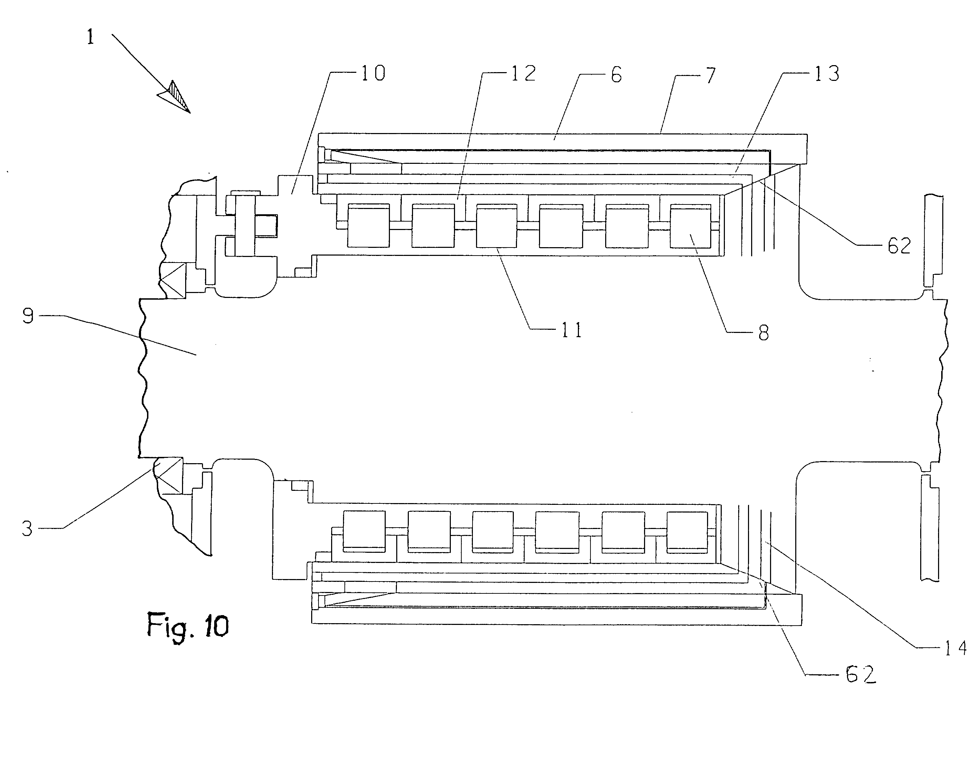

In this Fig. 9 roll the connections 61 are horizontal, that is to say they are in a plane which is are parallel with the axis of the roll 1. Fig. 10 shows a similar roll but with the connection between the cooling channel in the shell and the coolant supply 14 in the shaft being provided via a conical or tapered surface which is at an angle to the axis of the roll 1.

## Claims

1. A casting roll (1) comprising a shell (6) coupled to a drive shaft (9) and having a plurality of shaper units (S, 12) inside the shell, characterized in that the drive shaft (9) is of large diameter and is coupled directly to the shell (6).

2. A casting roll according to claim 1 characterized in that the shaper elements are arranged in two rows spaced 180 ° apart round the roll (top and bottom of Fig. 3).

3. A casting roll according to either previous claim, characterized in that the drive shaft is coupled to the middle of the shell (Fig. 3), the shaper units are arranged in half-rows, and the shaper units are supported by separate shaper unit support means (10) extending into the roll from each end.

4. A casting roll according to either of claims 1 and 2, characterized in that the drive is coupled to the shell at one end (Fig. 9), the shaper units are arranged in full rows, and the shaper units are supported by shaper unit support means (10) extending into the roll from only one end.

5. A casting roll according to any previous claim, characterized in that the shell is cooled by internal cooling channels (13) in the shell.

6. A casting roll according to any previous claim, characterized by means (18) for adjusting the axial position of the shaper elements along the roll.

7. A casting roll according to any previous claim, characterized in that the shell is cooled by external sprays or water-pads or hydro-pads.
